# EUROPEAN PATENT SPECIFICATION

(11) **EP 3 363 686 B1**
(45) Date of publication and mention of the grant of the patent: **10.07.2019**
(21) Application number: 18154779.5
(22) Date of filing: 01.02.2018
(51) Int. Cl.: B60R 11/02

(54) **DUAL DISPLAY SYSTEM FOR AN AGRICULTURAL VEHILCE**
DOPPELANZEIGESYSTEM FÜR EIN LANDWIRTSCHAFTLICHES FAHRZEUG
SYSTÈME D'AFFICHAGE DOUBLE DESTINÉ À UN VÉHICULE AGRICOLE

(30) Priority: 15.02.2017 GB 201702422
(43) Date of publication of application: 22.08.2018
(73) Proprietor: AGCO International GmbH, 8212 Neuhausen am Rheinfall (CH)
(72) Inventor: BARZEN, Alexander, Marktoberdorf 87616 (DE); STALLMEIER, Dirk, 87616 Marktoberdorf (DE)
(74) Representative: AGCO Intellectual Property Department

(56) References cited:
- DE-U1- 20 018 592
- US-A1- 2009 034 173
- US-A1- 2011 038 109

## Description

### Field of the Invention

The present invention relates to a dual display system for an agricultural vehicle, and an agricultural vehicle having such a system.

### Background of the Invention

In agricultural vehicles such as tractors, harvesters, or applicator machines such as sprayers, there is a need for the vehicle operator to monitor a wide range of data during field operations. Such data may include various sensor readings, map and route data, speed, weather forecasts, camera outputs, etc. In modern agricultural machinery, such data is generally displayed using various visual display units, or VDUs, provided in the cab of the vehicle.

As agricultural vehicles incorporate more sensor technology, accordingly the amount of different data sources to monitor also increases, requiring the use of multiple VDUs to effectively monitor the available data. Currently, vehicle operators can choose to provide extra VDUs within the vehicle cab, depending on the operations being performed, for example by attachment to a display bar as described in European Patent No. EP 2460681 B1.

However, on occasions where multiple VDUs are not required, the operator is faced with the challenge of retaining unused VDUs in position within the cab, and thereby obscuring the operator's view, or removing the unused VDUs from the cab, which consequently require safe storage.

United Kingdom patent application GB 2384610 A describes a dual display system comprising first and second display devices coupled by a mounting bracket assembly. The mounting bracket assembly includes a spring-clamped ball joint between the two display devices which enables them to be moved between an open arrangement (with the two displays side-by-side) and a closed arrangement (with one display behind the other).

US 2011/038109 A1 discloses a dual display system according to the preamble of claim 1.

It is an object of the invention to provide a display system for an agricultural vehicle having increased flexibility of use, depending on the requirements of the operator.

### Summary of the Invention

Accordingly, there is provided a dual display system for an agricultural vehicle, the dual display system comprising:
a first display device;
a second display device; and
a mounting bracket assembly coupling the first and second display devices, wherein the second display device is moveable relative to the first display device,
the mounting bracket assembly having a ball joint between the first and second display devices, such that second display device is moveable between:
   a first position wherein the second display device is positioned substantially in front of or behind the first display device, to present a single display to an operator, and
   a second position wherein the second display device is positioned adjacent to the first display device, to present two displays to an operator;
wherein the second display device is clamped to the ball joint using a ball joint clamp, which ball joint clamp is spring loaded with at least one spring device;
characterised in that the mounting bracket assembly comprises an engageable lever arm arranged to act against the spring device, to at least partially release the ball joint clamp and allow movement of the second display device relative to the first display device.

Accordingly, when only a single display is required by an operator, the second device is moved to the first position, such that the profile presented by the dual display system is minimised, and that the operator can easily see beyond and around the display system. When an operator requires multiple displays to be shown, the second display can easily be moved into the second position, whereupon the operator is presented with a dual display configuration. In one embodiment, the dual display system is configured such that when in the first position, the second display device is located in front of the first display device, wherein the second display device is the single display presented to the operator. In an alternative embodiment, the dual display system is configured such that when in the first position, the second display device is located behind the first display device, wherein the first display device is the single display presented to the operator.

Through use of a ball joint clamp, the second display device can be relatively easily repositioned about the ball joint using multiple degrees of freedom. As the clamp is spring loaded, accordingly the second display device will be retained in position on the ball joint when repositioned, and an operator can easily engage the lever arm to allow for repositioning of the second display device about the ball joint.

In a further aspect, the second display device may be moveable to a third position, wherein the second display device may be arranged in an alternative display orientation. For example, the second display device may be rotated through 90 degrees, to provide for the movement of the display device between a portrait display orientation and a landscape display orientation.

Preferably, the dual display system comprises a sensor coupled with the second display device, to detect the orientation of the second display device, wherein the displayed images of the second display device are adjusted based on the detected orientation.

As the second display device may be moved to different orientations via rotation about the ball joint, accordingly the second display device may be positioned in a portrait or landscape orientation, dependent on the degree of rotation. By detecting the orientation of the second display device, the images displayed on the display device can be reconfigured to follow the orientation of the display.

Preferably, the second display device is moveable through a 180 degree arc when going from the first position to the second position, wherein the second display device is inverted in the vertical direction when in the second positon relative to the first position.

By rotating the display device through 180 degrees using the ball joint, this provides a relatively simple operation for the movement of the second display device from the first position to the second position.

Preferably, the second display device is configured to invert the display images when moved between the first and second positions.

Preferably, the dual display system is configured to turn on or initialise the first display device when the second display device is moved to the second position.

When the second display device is moved to the second position, this is indicative of a desire of the operator to use the first display device. Accordingly, the dual display system is preferably configured to automatically turn on the first display device when such a movement is detected. Such an operation may be performed using a sensor to detect the orientation of the second display device. Alternatively, the first display device may be provided with a sensor to detect the presence of the second display device in front of the first display device, and to maintain the first display device in an inactive or low-power mode while the second display device obscures the first display device.

Preferably, the dual display device comprises a display controller coupled with the first display device and the second display device, wherein the display controller is configured to provide a display signal to the first display device and the second display device.

Preferably, the display controller receives a sensor signal to determine whether a single display or two displays are presented to an operator, wherein the display controller adjusts or reconfigures the display signal based on number of displays presented to the operator.

The display signal comprises the data which is to be displayed on the first display device and the second display device. When only the second display device is in use, the controller is configured to send a display signal to the second display device only. When it is detected that the first and second display devices are in use, the controller is configured to send separate display signals to both the first and second display devices, determining the data to be displayed on each.

The display controller can reconfigure the data to be displayed to take advantage of the additional display space provided. For example, the controller may configure the data to be displayed in a larger format across the two display devices, to be more easily readable by an operator. Additionally or alternatively, the controller may configure the data to display additional information on the first display device which may be relevant to the operation of the agricultural vehicle.

Preferably, the ball joint clamp is located at a first side of the second display device, wherein the lever arm projects to the opposite second side of the second display device, wherein engagement of the lever arm allows for movement of the second display device about the ball joint.

Preferably, the lever arm moves about a pivot to act against the spring device, wherein the pivot is positioned towards the first side of the second display device.

Preferably, the spring device is positioned at side of the pivot towards the first side of the display device, where the lever arm extends towards the opposite second side. As the lever arm extends from the pivot towards the opposite second side of the second display device, accordingly the moment arm applied through the pivot to act against the spring device translates into increased force acting on the spring device.

Preferably, the ball joint clamp and the lever arm are positioned at the rear face of the second display device, opposite to the front face of the second display device whereon data is displayed.

In one aspect, the first display device is fixed on the mounting bracket assembly.

In an alternative aspect, the first display device is mounted on a rail provided as part of the mounting bracket assembly, the first display device moveable on the rail.

In such an embodiment, preferably the first display device is moveable to allow for increased flexibility in the positioning of the first and second display devices. The first display device may be moveable along a horizontal and/or vertical axis.

Preferably, the first and second display devices comprise touch-screen displays. Additionally or alternatively, the first and second display devices comprise screens provided with adjacent operator controls or buttons.

In one aspect, at least one of the display devices are permanently affixed to the mounting bracket assembly.

Additionally or alternatively, at least one of the display devices are detachable from the mounting bracket assembly.

There is further provided an agricultural vehicle, preferably an agricultural tractor or harvester or applicator machine, having a dual display system as described above.

Preferably, the agricultural vehicle comprises an operator armrest, wherein the dual display system is mounted to the operator armrest.

### Detailed Description of the Invention

Embodiments of the invention will now be described, by way of example only, with reference to the accompanying drawings, in which:
Fig. 1 is a side view of an agricultural tractor having a dual display system according to the invention;
Fig. 2 is a top plan view of a schematic overview of a dual display system according to an embodiment of the invention, when in a dual display configuration;
Fig. 3 is a rear plan view of a configuration of the dual display system of Fig. 2;
Fig. 4 and Fig. 5 illustrate the action of repositioning one of the display devices of the system of Fig. 2;
Fig. 6 is a top plan view of the dual display system of Fig. 2 when in a single display configuration; and
Fig. 7 is a top plan view of a further embodiment of a dual display system according to the invention.

The drawings are provided by way of reference only, and will be acknowledged as not to scale.

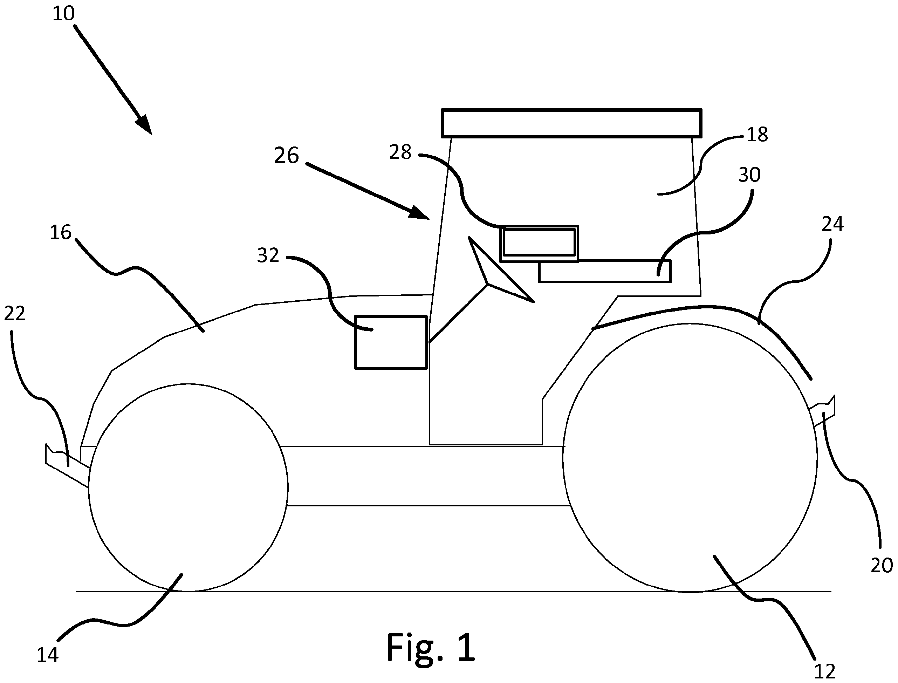

With reference to Fig. 1, an agricultural vehicle according to the invention in the form of an agricultural tractor is indicated at 10. The tractor 10 comprises rear wheels 12 and front wheels 14, a forward engine compartment 16 and a cab section 18. A rear linkage 20 is provided at the rear of the tractor 10, and a front linkage 22 is provided at the front of the tractor 10. Rear fenders 24 are provided to cover a portion of the rear wheels 12. It will be understood that the invention may also be provided in the form of an agricultural harvester, e.g. a combine harvester, or an applicator machine, e.g. a self-propelled sprayer vehicle.

Within the cab 18, an operator station 26 is provided, where the operator can access a dual display system 28 according to the invention. The dual display system 28 is provided mounted to an armrest 30 arranged to be located adjacent to an operator of the tractor 10. As a result, the dual display system 28 moves with the armrest 30, in the event that the operator station 26 is repositioned or adjusted by the operator. Alternatively, the dual display system 28 may be independently mounted within the cab 18, allowing for independent adjustment of the dual display system 28 relative to the other components of the tractor 10.

The tractor 10 is provided with at least one electronic control unit (ECU) 32. The ECU 32 is configured to interface with the operator controls of the operator station 26 and with the various systems and sensors provided about the tractor 10, to provide for monitoring and control of tractor operation. The operator controls and ECU 32 allow the operator to actuate different elements of the tractor 10, e.g. hydraulic circuits, lifting systems, HVAC operation, and/or to control the acceleration and steering of the tractor 10. In addition, the ECU 32 is configured to receive data from the different systems and sensors of the tractor 10, to output suitable display signals for the dual display system 28, and to determine what data is displayed using the dual display system 28. The ECU 32 can subsequently receive operator inputs provided via the dual display system 28, for the control of the different systems of the tractor 10.

It will be understood that the ECU 32 may be provided as a single processing device capable of performing a variety of commands relating to the control of the tractor, or the ECU 32 may be provided as a plurality of different controllers, e.g. a steering controller coupled with the steering system of the tractor, a display controller coupled with the dual display system 28, etc. It will be understood that the ECU 32 may be provided as a separate element of the tractor 10, or an individual display controller may be provided as a part of the dual display system 28 according to the invention.

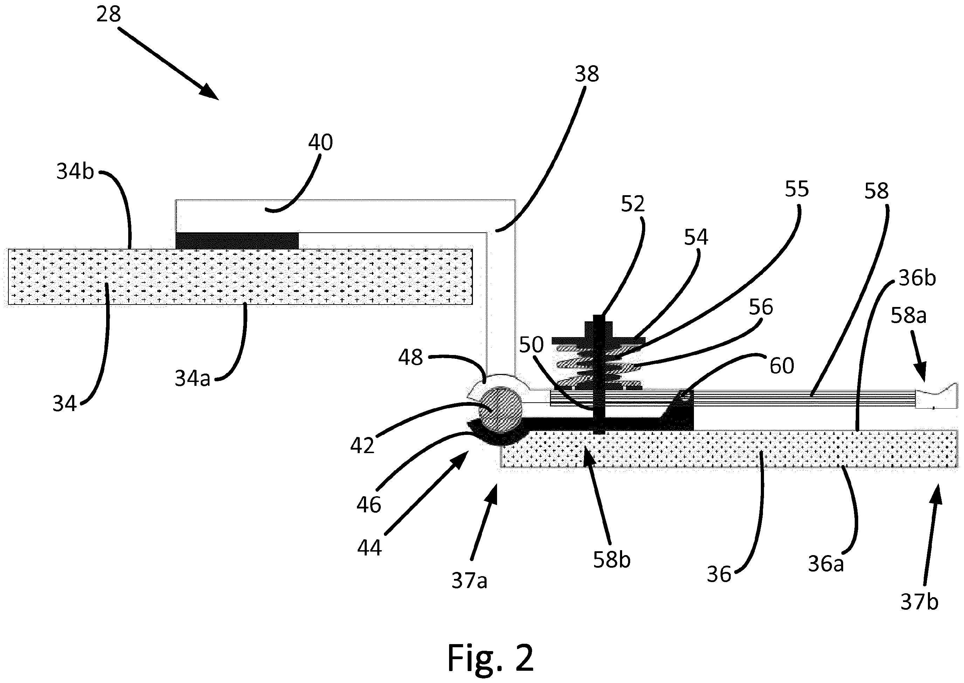

A top plan view of the dual display system 28 is provided in Fig. 2. The dual display system 28 comprises a first display device or VDU 34 and a second display device or VDU 36. The first and second display devices 34, 36 are connected via a mounting bracket assembly 38, such that the second display device 36 can be moved relative to the first display device 34. The display devices 34, 36 are preferably provided as touch screen display devices, allowing an operator to be presented with data on the devices, and capable of receiving input commands from the operator using a touch screen interface. Additionally or alternatively, it will be understood that the display devices 34, 36 may be provided with separate physical controls or inputs, for use by the operator to input commands.

The first and second display devices 34, 36 have respective front faces 34a, 36a and rear faces 34b, 36b, wherein data is displayed to an operator on the front faces 34a, 36a of the devices 34, 36.

The first display device 34 is mounted to an end of a bracket arm 40 at the rear face 34b of the display device 34. The bracket arm 40 is provided with a ball joint 42. The second display device 36 is coupled to the ball joint 42 via a ball joint clamp indicated at 44, so that the second display device 36 can be substantially freely rotated about the ball joint 42. The ball joint clamp 44 is located at a first lateral side 37a of the second display device 36. The ball joint clamp 44 comprises a first clamping jaw 46 and a second clamping jaw 48 hingedly coupled to the first clamping jaw 46 about a pivot point 60, the first and second clamping jaws 46, 48 engaging the ball joint 42.

A bolt 50 projects from the first clamping jaw 46, wherein an adjustable nut 52 and a bearing plate 54 are positioned towards the free end of the bolt 50. A biasing device in the form of a first bearing spring 55 is positioned between the bearing plate 54 and the second clamping jaw 48, to bias the clamping jaws 46, 48 to securely engage with the ball joint 42. It will be understood that the position of the bearing plate 54, and accordingly the clamping strength of the ball joint clamp 44, can be adjusted by tightening or loosening the nut 52 on the bolt 50.

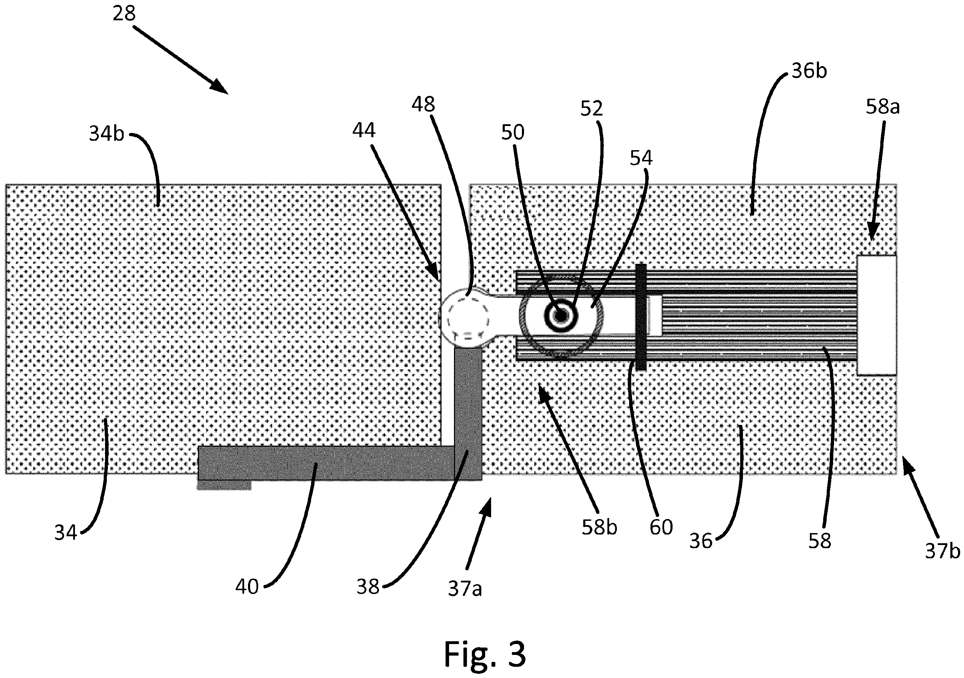

With further reference to the rear plan view provided in Fig. 3, the mounting bracket assembly 38 further comprises a lever arm 58 arranged to pivot about the pivot point 60 as a fulcrum. Between the bearing plate 54 and the lever arm 58 is positioned a second bearing spring 56. A first portion 58a of the lever arm 58 extends from the pivot point 60 in a direction away from the first lateral side 37a of the second display device 36 towards the opposed second lateral side 37b of the second display device 36, while a second portion 58b of the lever arm 58 extends towards the first lateral side 37a of the second display device 36, adjacent the spring 56. The first and second bearing springs 55, 56 act as a biasing device to releasably secure the clamping jaws 46, 48 with the ball joint 42. It will be understood that the biasing device may alternatively be provided in the form of a single spring arranged between the bearing plate 54 and the second clamping jaw 48 and lever arm 58.

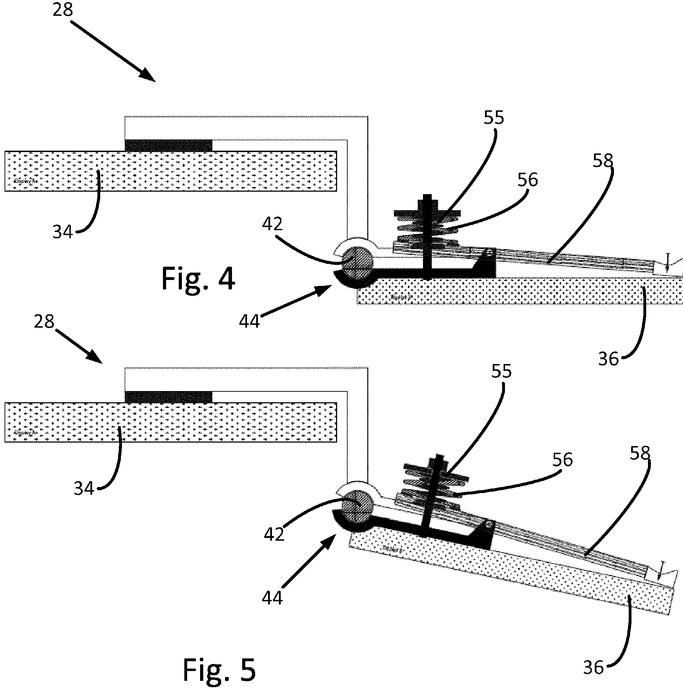

Movement of the first end 58a of the lever arm 58 results in a mirrored movement of the second end 58b of the lever arm 58 about the fulcrum of the pivot point 60. Accordingly, with reference to Figs. 4 and 5, the lever arm 58 can be actuated to enable movement of the second display device 36 about the ball joint 42. When in an at-rest position, the first bearing spring 55 acts on the clamping jaws 46,48 to hold the second display device 36 in position on the ball joint 42. Movement of the first end 58a of the lever arm 58 in a direction towards the rear face 36b of the second display device 36, as shown in Fig. 4, acts to move the second end 58b of the lever arm 58 in a direction away from the rear face 36b of the second display device 36. Accordingly, the second end 58b of the lever arm 58 acts against the spring force of the second bearing spring 56 and the bearing plate 54, which in turn relieves the pressure acting on the first bearing spring 55 to thereby release the pressure on the clamping jaws 46,48. Once the pressure is released on the jaws 46, 48, the second display device 36 can be easily moved about the ball joint 42, as shown in Fig. 5. As can be seen in the figures, the second end 58b of the lever arm 58 is provided with a profiled finger grip to ease the act of movement of the lever arm 58 by an operator.

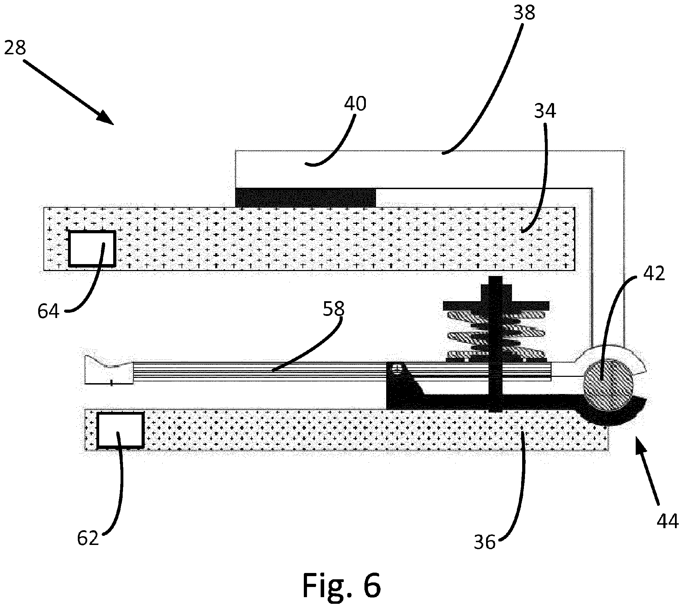

While Figs. 2 - 5 show the dual display system 28 in a configuration wherein two displays are presented to an operator, it will be understood that the flexible positioning of the second display device 36 provided by the use of a mounting bracket assembly 38 having a ball joint 42 allows for other display configurations to be used. A preferred display configuration is shown in Fig. 6, wherein the second display device 36 has been rotated through a 180 degree arc about the ball joint compared to the configuration shown in Fig. 2, wherein the dual display system 28 is arranged in a single display configuration. In such a display configuration, only the second display device 36 is used to display data, while the first display device 34 may be turned off or placed into a low-power mode.

Accordingly, for instances when an operator only requires a single display device to be used, the dual display system 28 can be adjusted to present a profile substantially corresponding with that of a single display device, thereby minimising the area obscured by the use of the display system 28. In further configurations, it will be understood that the second display device 36 may be rotated about the ball joint 42 to other angles as required. For example, the second display device 36 may be rotated through 90 degrees, to provide a switching of the second display device 36 between landscape or portrait display options.

With reference to the embodiment shown in Fig. 6, the dual display system 28 may comprise a first position sensor 62 coupled with the second display device 36, the sensor 62 arranged to detect the orientation of the second display device 36. The output of the position sensor 62 is provided to the ECU 32, which is configured to adjust the display signals sent to the dual display system 28 based on the detected orientation of the second display device 36. For example, the ECU 32 may act to invert the orientation of the display signal sent for display on the second display device 36, to ensure that the operator is provided with a corrected display image, regardless of the device orientation.

Additionally or alternatively, the dual display system 28 may comprise a second sensor 64 coupled with the first display device 34, the second sensor 64 arranged to detect the presence of the second display device 36 in front of the first display device 34. The output of the second sensor 64 may be provided to the ECU 32, such that the first display device 34 can be commanded to turn off or be placed into a low-power or standby mode when the second display device 36 is positioned in front of the first display device 34. Similarly, when the second display device 36 is moved away from the first display device 34, the output of the second sensor 64 can be used by the ECU 32 to automatically command the first display device 34 to turn on or reactivate from a standby mode.

In a further aspect of the invention, the ECU 32 is arranged to detect whether one or two display devices 34, 36 are in use, and to adjust or reconfigure the display signals sent to the display devices 34, 36 accordingly. For example, when only the second display device 36 is in use, as in the display configuration shown in Fig. 6, the ECU 32 is configured to send a display signal to the second display device 36 only. However, when it is detected that both the first and second display devices 34, 36 are in use, as in the display configuration shown in Fig. 2, the ECU 32 is configured to send separate display signals to both the first and second display devices 34, 36, determining the data to be displayed on each. The ECU 32 can reconfigure the data to be displayed to take advantage of the additional display space provided. The ECU 32 may configure the data to displayed in a larger format across the two display devices 34, 36, to be more easily readable by an operator. Additionally or alternatively, the ECU 32 may configure the data to display additional information on the first display device 34 which may be relevant to the operation of the tractor 10.

Accordingly, the ECU 32 is configured to perform dynamic reconfiguring of the displayed data, based on the available active displays as indicated to the ECU 32 via the output of various sensor systems 62, 64.

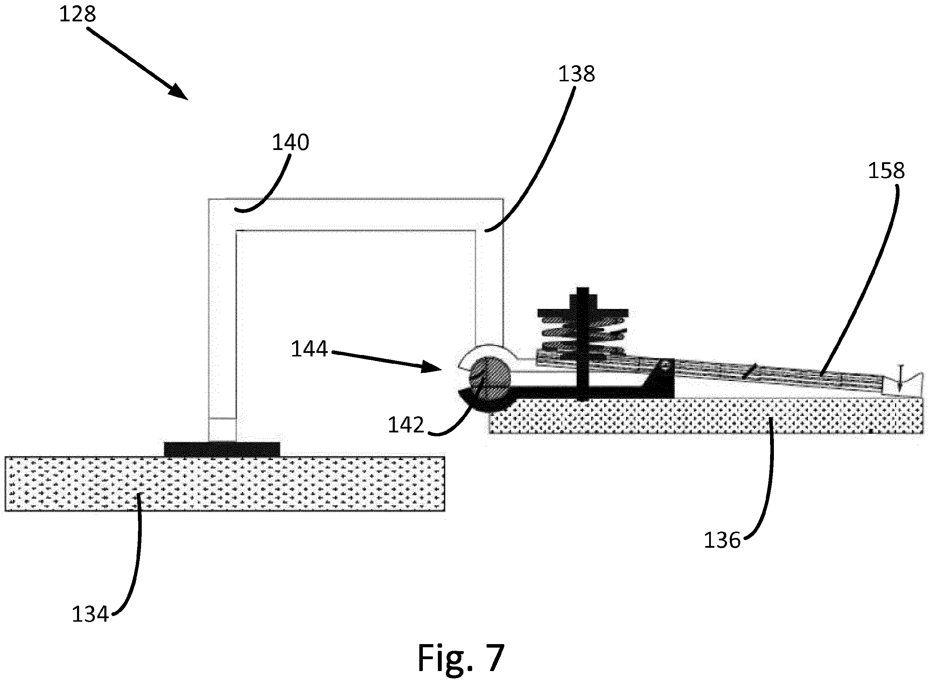

A further embodiment of a dual display system according to the invention is indicated at 128 in Fig. 7. The features of this further embodiment are substantially the same as for the embodiment shown in Figs. 2 - 6, with some of the relevant features referenced using the same numerals as the earlier embodiment when incremented by 100. In this embodiment, the mounting bracket assembly 138 is configured to have an altered bracket arm 140, to allow for an alternate positioning configuration of display devices. In particular, the first display device 134 is projected in front of the transverse plane wherein the ball joint 142 is located. In addition, the first display device 134 is positioned in front of the transverse plane containing the second display device 136, when in the second display position as shown in Fig. 7.

In this embodiment, movement of the second display device 136 about the ball joint 142, through actuation of the lever arm 158 to partly release the ball joint clamp 144, allows the second display device 136 to be moved from the second display position as shown in Fig. 7, to a first display position wherein the second display device 136 is arranged substantially behind the first display device 134. In this position, the first display device 134 is that which is presented to the vehicle operator, allowing the second display device 136 to be placed in an inactive or low-power mode, as described above.

In a preferred configuration of the dual display system 28, the first display device 34 is fixed in position on the mounting bracket assembly 38, in that the first display device 34 is fixed to the mounting arm 40. In an alternative configuration, the first display device 34 is moveably mounted on the mounting arm 40. For example, the first display device may be provided mounted to a rail provided as part of the mounting bracket assembly 38, the first display device 34 moveable on the rail. Such a configuration can allow for a degree of repositioning of the first display device 34 on the mounting bracket assembly 38, for example the first display device 34 may be moveable along a horizontal and/or vertical axis.

It will be understood that the display devices 34, 36 may be provided as a permanent fixture of the dual display system 28. Alternatively one or both of the display devices 34, 36 may be detachable from the mounting bracket assembly 38, for remote use. In this case, one of both of the display devices 34, 36 may be provided as a multi-purpose user input device, e.g. a tablet computer.

The system of the invention provides a display system for an agricultural vehicle which can easily be rearranged between a single or dual display mode.

In the foregoing, the applicants have described a dual display system 28 for an agricultural vehicle 10 such as an agricultural tractor, harvester, or applicator machine. The dual display system has first 34 and second 36 display devices which are connected using a ball joint 42. By engagement of a lever arm 58 to release a spring-loaded clamp 44 on the ball joint 42, the second display device 36 can be moved relative to the first display device 34 by rotation about the ball joint 42, between a first position where only a single display is presented to an operator, to a second position where two displays are presented. As a result, an operator can easily manipulate the dual display system 28 to provide one or two separate display screens, as required.

## Claims

1. A dual display system (28) for an agricultural vehicle (10), the dual display system comprising:
a first display device (34);
a second display device (36); and
a mounting bracket assembly (38) coupling the first and second display devices, wherein the second display device (36) is moveable relative to the first display device (34),
the mounting bracket assembly having a ball joint (42) between the first and second display devices (34, 36), such that second display device (36) is moveable between:
a first position wherein the second display device (36) is positioned substantially in front of or behind the first display device (34), to present a single display to an operator, and
a second position wherein the second display device (36) is positioned adjacent to the first display device (34), to present two displays to an operator;
wherein the second display device (36) is clamped to the ball joint (42) using a ball joint clamp (44), which ball joint clamp is spring loaded with at least one spring device (55, 56);
**characterised in that** the mounting bracket assembly (38) comprises an engageable lever arm (58) arranged to act against the spring device (55, 56), to at least partially release the ball joint clamp (44) and allow movement of the second display device (36) relative to the first display device (34).

2. The dual display system as claimed in claim 1, wherein the dual display system (28) comprises a sensor (62) coupled with the second display device (36), to detect the orientation of the second display device, wherein the displayed images of the second display device are adjusted based on the detected orientation.

3. The dual display system as claimed in claim 1 or claim 2, wherein the second display device (36) is moveable through a 180 degree arc when going from the first position to the second position, wherein the second display device (36) is inverted in the vertical direction when in the second positon relative to the first position.

4. The dual display system as claimed in any one of claims 1 to 3, wherein the second display device (36) is configured to invert the display images when moved between the first and second positions.

5. The dual display system as claimed in any one of claims 1 to 4, wherein the dual display system (28) is configured to turn on or initialise the first display device (34) when the second display device (36) is moved to the second position.

6. The dual display system as claimed in any one of claims 1 to 5, wherein the dual display system (28) comprises a display controller (32) coupled with the first display device (34) and the second display device (36), wherein the display controller (32) is configured to provide a display signal to the first display device (34) and the second display device (36), wherein the display controller (32) receives a sensor signal to determine whether a single display or two displays are presented to an operator, the display controller (32) being arranged to reconfigure the display signal based on number of displays presented to the operator.

7. The dual display system as claimed in claim 1, wherein the ball joint clamp (44) is located at a first lateral side (37a) of the second display device (36), wherein the lever arm (58) projects to the opposite second lateral side (37b) of the second display device (36), wherein engagement of the lever arm (58) allows for movement of the second display device (36) about the ball joint (42).

8. The dual display system as claimed in claim 7, wherein the lever arm (58) moves about a pivot (60) to act against the spring device (55, 56), wherein the pivot (60) is positioned towards the first lateral side (37a) of the second display device (36).

9. The dual display system as claimed in claim 8, wherein the spring device (55, 56) is positioned at a side of the pivot (60) towards the first lateral side (37a) of the second display device (36), and wherein the lever arm (58) extends towards the opposite second lateral side (37b).

10. The dual display system as claimed in any one of claims 1 to 9, wherein the ball joint clamp (44) and the lever arm (58) are positioned at the rear face (36b) of the second display device (36), opposite to the front face (36a) of the second display device (36) whereon data is displayed.

11. The dual display system as claimed in any one of claims 1 to 10, wherein the first and second display devices (34, 36) comprise touch-screen displays.

12. An agricultural vehicle (10), preferably an agricultural tractor or harvester or applicator machine, having a dual display system (28) as claimed in any one of claims 1 to 11.

## Patentansprüche

1. Dualdisplaysystem (28) für ein landwirtschaftliches Fahrzeug (10), wobei das Dualdisplaysystem Folgendes aufweist:
eine erste Displayeinheit (34);
eine zweite Displayeinheit (36); und
eine Montagehalterungsanordnung (38), die die erste Displayeinheit und die zweite Displayeinheit verbindet, wobei die zweite Displayeinheit (36) relativ zu der ersten Displayeinheit (34) beweglich ist,
wobei die Montagehalterungsanordnung ein Kugelgelenk (42) zwischen der ersten Displayeinheit (34) und der zweiten Displayeinheit (36) besitzt, sodass die zweite Displayeinheit (36) zwischen dem Folgenden beweglich ist:
einer ersten Position, in der die zweite Displayeinheit (36) im Wesentlichen vor oder hinter der ersten Displayeinheit (34) positioniert ist, um einem Bediener ein einzelnes Display zu präsentieren, und
einer zweiten Position, in der die zweite Displayeinheit (36) benachbart zu der ersten Displayeinheit (34) positioniert ist, um einem Bediener zwei Displays zu präsentieren;
wobei die zweite Displayeinheit (36) mittels einer Kugelgelenkklemme (44) an dem Kugelgelenk (42) geklemmt ist, wobei die Kugelgelenkklemme durch mindestens eine Federvorrichtung (55, 56) federbelastet ist; **dadurch gekennzeichnet, dass**
die Montagehalterungsanordnung (38) einen zuschaltbaren Hebelarm (58) aufweist, der angeordnet ist, um gegen die Federvorrichtung (55, 56) zu wirken, um die Kugelgelenkklemme (44) zumindest teilweise freizugeben und eine Bewegung der zweiten Displayeinheit (36) relativ zu der ersten Displayeinheit (34) zu gestatten.

2. Dualdisplaysystem nach Anspruch 1, wobei das Dualdisplaysystem (28) einen mit der zweiten Displayvorrichtung (36) verbundenen Sensor (62) aufweist, um die Ausrichtung der zweiten Displayvorrichtung zu ermitteln, wobei die angezeigten Bilder der zweiten Displayvorrichtung basierend auf der ermittelten Ausrichtung angezeigt werden.

3. Dualdisplaysystem nach Anspruch 1 oder 2, wobei die zweite Displayvorrichtung (36) über einen 180 Grad Bogen beweglich ist, wenn sie sich von der ersten Position zu der zweiten Position bewegt, wobei die zweite Displayvorrichtung (36) in der zweiten Position relativ zu der ersten Position in vertikaler Richtung umgekehrt wird.

4. Dualdisplaysystem nach mindestens einem der Ansprüche 1 bis 3, wobei die zweite Displayvorrichtung (36) konfiguriert ist, um die Displaybilder umzukehren, wenn es zwischen der ersten und zweiten Position bewegt wird.

5. Dualdisplaysystem nach mindestens einem der Ansprüche 1 bis 4, wobei das Dualdisplaysystem (28) konfiguriert ist, um die erste Displayvorrichtung (34) anzustellen oder zu initialisieren, wenn die zweite Displayvorrichtung (36) in die zweite Position bewegt wird.

6. Dualdisplaysystem nach mindestens einem der Ansprüche 1 bis 5, wobei das Dualdisplaysystem (28) einen mit der ersten Displayvorrichtung (34) und der zweiten Displayvorrichtung (36) verbundenen Displaycontroller (32) aufweist, wobei der Displaycontroller (32) konfiguriert ist, um der ersten Displayvorrichtung (34) und der zweiten Displayvorrichtung (36) ein Displaysignal bereitzustellen, wobei der Displaycontroller (32) ein Sensorsignal empfängt, um festzustellen, ob ein einzelnes Display oder beide Displays einem Bediener zu präsentieren ist, wobei der Displaycontroller (32) angeordnet ist, um das Displaysignal basierend auf der Anzahl der dem Bediener präsentierten Displays zu rekonfigurieren.

7. Dualdisplaysystem nach Anspruch 1, wobei die Kugelgelenkklemme (44) an einer ersten lateralen Seite (37a) der zweiten Displayvorrichtung (36) angeordnet ist, wobei der Hebelarm (58) zu der entgegengesetzten lateralen Seite (37b) der zweiten Displayvorrichtung (36) vorsteht, wobei der Eingriff des Hebelarms (58) eine Bewegung der zweiten Displayvorrichtung (36) um das Kugelgelenk (42) gestattet.

8. Dualdisplaysystem nach Anspruch 7, wobei sich der Hebelarm (58) um einen Drehpunkt (60) bewegt, um gegen die Federvorrichtung (55, 56) zu wirken, wobei der Drehpunkt (60) in Richtung der ersten lateralen Seite (37a) der zweiten Displayvorrichtung (36) positioniert ist.

9. Dualdisplaysystem nach Anspruch 8, wobei die Federvorrichtung (55, 56) an einer Seite des Drehpunkts (60) in Richtung der ersten lateralen Seite (37a) der zweiten Displayvorrichtung (36) positioniert ist, und wobei sich der Hebelarm (58) in Richtung der entgegengesetzten zweiten lateralen Seite (37b) erstreckt.

10. Dualdisplaysystem nach mindestens einem der Ansprüche 1 bis 9, wobei die Kugelgelenkklemme (44) und der Hebelarm (58) an der hinteren Stirnseite (36b) der zweiten Displayvorrichtung (36) positioniert sind, wobei dies entgegengesetzt zu der vorderen Stirnseite (36a) der zweiten Displayeinheit (36) ist, auf der Daten angezeigt werden.

11. Dualdisplaysystem nach mindestens einem der Ansprüche 1 bis 10, wobei die erste Displayeinheit (34) und die zweite Displayeinheit (36) Touchscreen-Displays aufweisen.

12. Landwirtschaftliches Fahrzeug (10), vorzugsweise ein landwirtschaftlicher Traktor oder ein Mähdrescher oder eine Applikationsmaschine, mit einem Dualdisplaysystem (28) nach mindestens einem der Ansprüche 1 bis 11.

## Revendications

1. Système de double affichage (28) pour un véhicule agricole (10), le système de double affichage comprenant :
un premier dispositif d'affichage (34) ;
un second dispositif d'affichage (36) ; et
un ensemble support de montage (38) accouplant les premier et second dispositifs d'affichage, dans lequel le second dispositif d'affichage (36) est mobile par rapport au premier dispositif d'affichage (34),
l'ensemble support de montage ayant un joint à rotule (42) entre les premier et second dispositifs d'affichage (34, 36), de sorte que le second dispositif d'affichage (36) soit mobile entre :
une première position dans laquelle le second dispositif d'affichage (36) est positionné sensiblement devant ou derrière le premier dispositif d'affichage (34), pour présenter un seul afficheur à un opérateur, et
une seconde position dans laquelle le second dispositif d'affichage (36) est positionné adjacent au premier dispositif d'affichage (34), pour présenter deux afficheurs à un opérateur ;
dans lequel le second dispositif d'affichage (36) est serré au joint à rotule (42) à l'aide d'un collier de serrage de joint à rotule (44), lequel collier de serrage de joint à rotule est chargé par ressort avec au moins un dispositif de ressort (55, 56) ;
**caractérisé en ce que** l'ensemble support de montage (38) comprend un bras de levier enclenchable (58) conçu pour agir contre le dispositif de ressort (55, 56), pour libérer au moins partiellement le collier de serrage de joint à rotule (44) et permettre un déplacement du second dispositif d'affichage (36) par rapport au premier dispositif d'affichage (34).

2. Système de double affichage selon la revendication 1, dans lequel le système de double affichage (28) comprend un capteur (62) accouplé au second dispositif d'affichage (36), pour détecter l'orientation du second dispositif d'affichage, dans lequel les images affichées du second dispositif d'affichage sont ajustées d'après l'orientation détectée.

3. Système de double affichage selon la revendication 1 ou la revendication 2, dans lequel le second dispositif d'affichage (36) est mobile à travers un arc de 180 degrés lorsqu'il va de la première position à la seconde position, dans lequel le second dispositif d'affichage (36) est inversé dans la direction verticale lorsqu'il est dans la seconde position par rapport à la première position.

4. Système de double affichage selon l'une quelconque des revendications 1 à 3, dans lequel le second dispositif d'affichage (36) est configuré pour inverser les images affichées lorsqu'il est déplacé entre les première et seconde positions.

5. Système de double affichage selon l'une quelconque des revendications 1 à 4, dans lequel le système de double affichage (28) est configuré pour mettre sous tension ou initialiser le premier dispositif d'affichage (34) lorsque le second dispositif d'affichage (36) est déplacé à la seconde position.

6. Système de double affichage selon l'une quelconque des revendications 1 à 5, dans lequel le système de double affichage (28) comprend un dispositif de commande d'affichage (32) accouplé au premier dispositif d'affichage (34) et au second dispositif d'affichage (36), dans lequel le dispositif de commande d'affichage (32) est configuré pour fournir un signal d'affichage au premier dispositif d'affichage (34) et au second dispositif d'affichage (36), dans lequel le dispositif de commande d'affichage (32) reçoit un signal de capteur pour déterminer si un seul afficheur ou deux afficheurs sont présentés à un opérateur, le dispositif de commande d'affichage (32) étant conçu pour reconfigurer le signal d'affichage d'après un nombre d'afficheurs présentés à l'opérateur.

7. Système de double affichage selon la revendication 1, dans lequel le collier de serrage de joint à rotule (44) est situé d'un premier côté latéral (37a) du second dispositif d'affichage (36), dans lequel le bras de levier (58) dépasse vers le second côté latéral opposé (37b) du second dispositif d'affichage (36), dans lequel un enclenchement du bras de levier (58) permet un déplacement du second dispositif d'affichage (36) autour du joint à rotule (42).

8. Système de double affichage selon la revendication 7, dans lequel le bras de levier (58) se déplace autour d'un pivot (60) pour agir contre le dispositif de ressort (55, 56), dans lequel le pivot (60) est positionné vers le premier côté latéral (37a) du second dispositif d'affichage (36).

9. Système de double affichage selon la revendication 8, dans lequel le dispositif de ressort (55, 56) est positionné d'un côté du pivot (60) vers le premier côté latéral (37a) du second dispositif d'affichage (36), et dans lequel le bras de levier (58) s'étend vers le second côté latéral opposé (37b).

10. Système de double affichage selon l'une quelconque des revendications 1 à 9, dans lequel le collier de serrage de joint à rotule (44) et le bras de levier (58) sont positionnés au niveau de la face arrière (36b) du second dispositif d'affichage (36), opposée à la face avant (36a) du second dispositif d'affichage (36) sur lequel des données sont affichées.

11. Système de double affichage selon l'une quelconque des revendications 1 à 10, dans lequel les premier et second dispositifs d'affichage (34, 36) comprennent des afficheurs à écran tactile.

12. Véhicule agricole (10), de préférence tracteur agricole ou moissonneuse ou machine d'application, ayant un système de double affichage (28) tel que revendiqué à l'une quelconque des revendications 1 à 11.
